# EUROPEAN PATENT SPECIFICATION

(11) **EP 2 713 674 B1**
(45) Date of publication and mention of the grant of the patent: **10.01.2018**
(21) Application number: 11858364.0
(22) Date of filing: 18.07.2011
(51) Int. Cl.: H04W 24/02, H04W 8/26, H04W 48/08, H04W 76/00, H04W 76/02, H04W 92/20

(54) **DATA TRANSMISSION METHOD, DEVICE AND SYSTEM**
DATENÜBERTRAGUNGSVERFAHREN, -VORRICHTUNG UND -SYSTEM
PROCÉDÉ, DISPOSITIF ET SYSTÈME DE TRANSMISSION DE DONNÉES

(43) Date of publication of application: 02.04.2014
(73) Proprietor: Huawei Technologies Co., Ltd., Longgang District Shenzhen, Guangdong 518129 (CN)
(72) Inventor: ZHAO, Quan, Guangdong 518129 (CN); LAI, Zhichang, Guangdong 518129 (CN)
(74) Representative: Maiwald Patentanwalts GmbH
(86) International application number: PCT/CN2011/077261
(87) International publication number: WO 2012/106899

(56) References cited:
- EP-A1- 2 337 402
- WO-A1-2009/086787
- WO-A1-2010/078676
- ETSI TS 136 420 V10.1.0 (2011-06): "ETSI TS 136 420 V10.1.0 (2011-06); LTE; Evolved Universal Terrestrial Radio Access Network (E-UTRAN); X2 general aspects and principles (3GPP TS 36.420 version 10.1.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 3, no. V10.1.0, 1 June 2011 (2011-06-01), XP014066422,
- 3GPP TS 36.422 V10.1.0 (2011-06): "3GPP TS 36.422 V10.1.0 (2011-06); 3rd Generation Partnership Project; Technical Specification Group Radio Access Network; Evolved Universal Terrestrial Radio Access Network (E-UTRAN); X2 signalling transport (Release 10)", 3GPP STANDARD; 3GPP TS 36.422, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V10.1.0, 24 June 2011 (2011-06-24), pages 1-8, XP050553586, [retrieved on 2011-06-24]
- 3GPP TS 36.424 V10.1.0 (2011-06): "3GPP TS 36.424 V10.1.0 (2011-06); 3rd Generation Partnership Project; Technical Specification Group Radio Access Network; Evolved Universal Terrestrial Radio Access Network (E-UTRAN); X2 data transport (Release 10)", 3GPP STANDARD; 3GPP TS 36.424, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V10.1.0, 24 June 2011 (2011-06-24), pages 1-8, XP050553588, [retrieved on 2011-06-24]
- T-MOBILE ET AL: "3GPP TSG-RAN WG3 #54; R3-061738; Description of network sharing scenarios and needed functionality", 3GPP DRAFT; R3-061738, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Riga, Latvia; 20061101, 1 November 2006 (2006-11-01), XP050160630, [retrieved on 2006-11-01]
- 3GPP TS 36.423 V10.2.0 (2011-06): "3GPP TS 36.423 V10.2.0 (2011-06); 3rd Generation Partnership Project; Technical Specification Group Radio Access Network; Evolved Universal Terrestrial Radio Access Network (E-UTRAN); X2 application protocol (X2AP) (Release 10)", 3GPP STANDARD; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V10.2.0, 24 June 2011 (2011-06-24), pages 1-130, XP050553587, [retrieved on 2011-06-24]
- LTE: 'Evolved Universal Terrestrial Radio Access Network (E-UTRAN); X2 general aspects and principles' 3GPP TS 36.420 VERSION 10.1.0 RELEASE 10 01 June 2011, XP014066422
- LTE: 'Evolved Universal Terrestrial Radio Access Network (E-UTRAN); X2 data transport' 3GPPTS 36.424 VERSION 10.1.0 RELEASE 10 01 June 2011, XP050553588

## Description

### FIELD OF THE INVENTION

The present invention relates to the communications field, and in particular, to a data transmission method, device, and system.

### BACKGROUND OF THE INVENTION

A long term evolution (Long Term Evolution, LTE for short) network is an evolved radio network defined by the 3rd generation partnership project (The 3rd Generation Partnership Project, 3GPP for short). As an access and bearer network, the LTE network has functions of activation, maintenance, and activation bearing, and at the same time has a handover function for continuously providing a data service for a mobile user. A document, ETSI TS 126 420 V10.1.0, vol. 3GPP RAN 3, no. V10.1.0, discloses X2 interface general principles and etc.

When deploying the LTE network, an operator generally shares a base station (Evolved NodeB, eNB for short) with another operator by using a radio network sharing (Evolved Universal Terrestrial Radio Access Network Sharing, eRAN sharing for short) technology in order to reduce network construction costs or when a network station is difficult to construct. When operators share an eNB base station, different operators are generally distinguished on a radio network layer of an interface of the eNB base station. However, service bearers of an eNB base station device are not separated on a transport layer of the interface, that is, the transport layer does not distinguish different operators, which means that service bearers of each operator cannot be separated from each other. This brings great inconvenience to operation and maintenance of radio networks of the operators and severely affects work efficiency of the radio networks.

### SUMMARY OF THE INVENTION

The technical problem to be solved of the embodiments of the present invention is how to provide a data transmission method, device, and system, which are capable of implementing separation of service bearers between operators, thereby greatly improving flexibility of' a radio network and facilitating operation and maintenance work of the operators.

To solve the technical problem, the embodiments of the present invention adopt the following technical solutions:

A data transmission method includes:
establishing an X2 interface control plane between a first base station and a second base station, where the first base station and the second base station are base stations shared by a first operator and a second operator;
on a transmission link of the X2 interface control plane, transferring an X2 interface user plane address of a first user equipment through signaling exchange between the first base station and the second base station, where the first user equipment is a subscriber of the first operator, and the X2 interface user plane address of the first user equipment belongs to a value range of X2 interface user plane address assigned for the first operator;
according to the value range of X2 interface user plane address, establishing, between the first base station and the second base station, a first X2 interface user plane service bearer dedicated to the first operator; and
transmitting user data of the first user equipment on the established first X2 interface user plane service bearer.

A data transmission device includes:
a control plane establishing unit disposed in a first base station, configured to cooperate with a second base station to establish an X2 interface control plane between the first base station and the second base station, where the first base station and the second base station are base stations shared by a first operator and a second operator;
a user plane address transferring unit disposed in the first base station, configured to, on a transmission link of the X2 interface control plane, transfer an X2 interface user plane address of a first user equipment, where the first user equipment is a subscriber of the first operator, and the X2 interface user plane address of the first user equipment belongs to a value range of X2 interface user plane address assigned for the first operator;
a user plane establishing unit disposed in the first base station, configured to cooperate with the second base station to establish, between the first base station and the second base station according to the value range of X2 interface user plane address, a first X2 interface user plane service bearer dedicated to the first operator; and
a data transmission unit disposed in the first base station, configured to transmit user data of the first user equipment to the second base station on the established first X2 interface user plane service bearer.

A data transmission system includes the data transmission device, where the data transmission device is disposed in the first base station. The system further includes: the second base station communicating with the first base station through an X2 interface.

According to the data transmission method, device, and system in the embodiments, a dedicated X2 interface user plane service bearer is established for each operator and a user equipment belonging to the first operator uses the first X2 interface user plane service bearer to transmit user data. By using the method, service data of each operator may enter a corresponding X2 interface user plane transmission bearer thereof, thereby implementing separation of service bearers between operators, improving flexibility of the radio network, and facilitating operation and maintenance work of the operators.

### BRIEF DESCRIPTION OF THE DRAWINGS

To describe technical solutions in the embodiments of the present invention more clearly, the following briefly describes the accompanying drawings required in the description of the embodiments. Apparently, the accompanying drawings described in the following illustrate only some embodiments of the present invention, and a person skilled in the art may obtain other accompanying drawings based on these accompanying drawings without creative efforts.
FIG. 1 is a schematic diagram of an X2 interface in the prior art;
FIG. 2 is a schematic Flow chart of a data transmission method according to an embodiment of the present invention;
FIG. 3 is a first schematic diagram of a data transmission device according to an embodiment of the present invention;
FIG. 4 is a schematic diagram of an X2 interface established according to mode 1 according to an embodiment of the present invention;
FIG. 5 is a schematic diagram of an X2 interface established according to mode 2 according to an embodiment of the present invention;
Fig. 6 is a schematic diagram of an X2 interface established according to mode 3 according to an embodiment of the present invention;
FIG. 7 is a second schematic diagram of a data transmission device according to an embodiment of the present invention; and
FIG. 8 is a schematic diagram of a data transmission system according to an embodiment of the present invention.

### DETAILED DESCRIPTION OF THE EMBODIMENTS

Embodiments of the present invention provide a data transmission method, device, and system, which are capable of implementing separation of service bearers between operators, thereby greatly improving flexibility of a radio network and facilitating operation and maintenance work of the operators.

The following describes the embodiments of the present invention in detail with reference to the accompanying drawings.

### Embodiment 1

An EUTRAN (Evolved UMTS Terrestrial Radio Access Network, evolved UMTS terrestrial radio access network) is a next generation radio access network capable of providing a higher uplink/downlink rate, a lower transmission delay, a more reliable radio transmission, and is a radio access network of an LTE network.

A mobility management entity (Mobility Management Entity, MME for short) is a control plane functional entity responsible for managing and storing contexts (for example, a UE identifier, a mobility management state, a user security parameter, and so on) of a user equipment (User Equipment, UE for short), allocating a temporary identifier for a user, and performing authentication on the user when the UE camps on a tracking area or a network.

Interfaces related to the EUTRAN are an S1 interface, an X2 interface, and a Uu interface. The S1 interface is an interface between the EUTRAN and a network side, for example, S1-MME (an interface between the EUTRAN and the MME); the Uu interface is an interface between the UE and the EUTRAN.

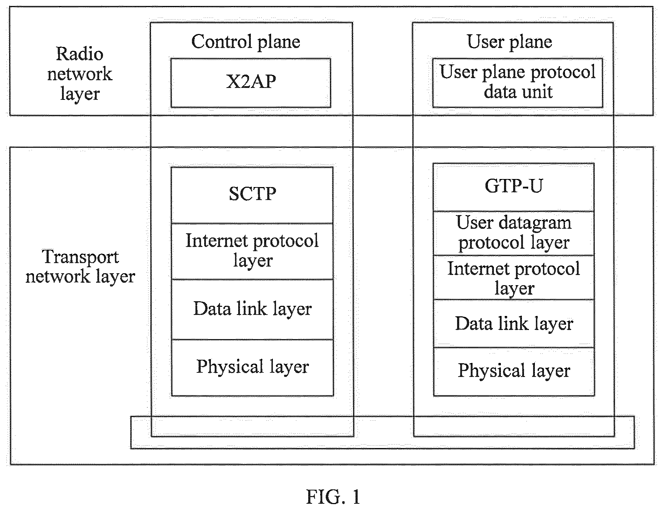

The X2 interface is an interface between base stations, and is an internal interface of the EUTRAN. Generally, the X2 interface is horizontally divided into a radio network layer (Radio Network Layer) and a transport network layer (Transport Network Layer), and vertically divided into an X2 interface control plane (Control Plane) and an X2 interface user plane (User Plane). As shown in FIG. 1, a protocol data unit (Protocol Data Unit, PDU for short) refers to a data unit transported between peer layers.

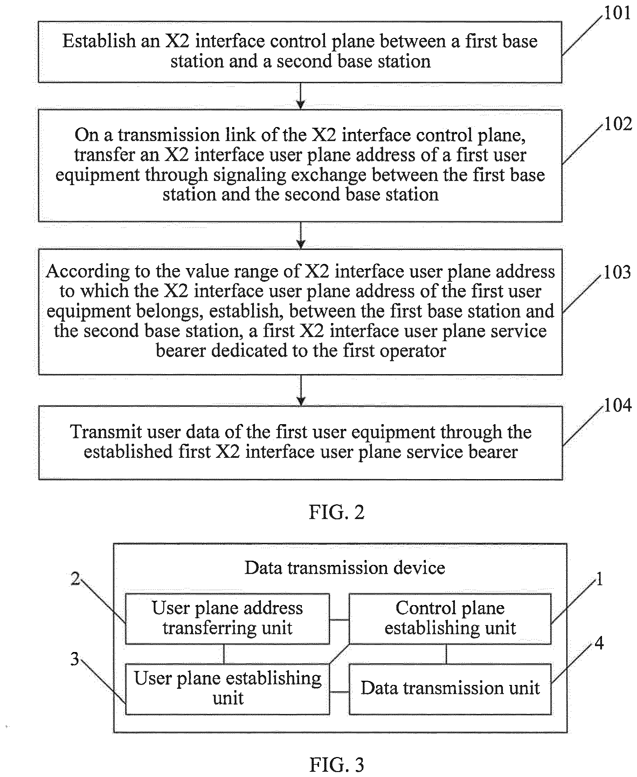

This embodiment provides an interface separation method of a radio network sharing technology, using two base stations and two operators as an example. As shown in FIG. 2, the method includes:

Step 101: Establish an X2 interface control plane between a first base station and a second base station, where the first base station and the second base station are base station devices shared by a first operator and a second operator.

In this embodiment, the X2 interface control plane may be established through at least two methods: establishment through manual configuration and establishment by triggering a signaling message, where the establishing the X2 interface control plane by triggering a signaling message may be applicable to a scenario where no X2 interface is configured between base stations. During establishing the X2 interface control plane through manual configuration, a source eNB base station (the first base station) and a destination eNB base station (the second base station) of the X2 interface control plane need to be planned and a situation with multiple source eNB base stations and destination eNB base stations needs to be considered. The X2 interface control planes of different operators are distinguished through (SourceIP@X, Destination IP@X), where X represents different operators.

In this embodiment, unless otherwise specified, the first base station and the second base station involved in a process of signaling message exchange may be understood as the source eNB base station and the destination eNB base station respectively.

The establishing the X2 interface control plane by triggering a signaling message may be performed when a user equipment is handed over. Each base station is connected to an MME of each operator. Therefore, when a user equipment is handed over, the establishing the X2 interface control plane may be triggered. The establishing the X2 interface control plane needs to be completed through signaling message exchange between the first base station serving as a handover source base station and the MME.

The following describes the process of establishing the X2 interface control plane by triggering a signaling message in detail.

When a first user equipment is handed over, the first base station serving as the handover source base station sends a first configuration signaling message to an MME, where the first user equipment is a subscriber of the first operator, the first configuration signaling message is generally an ENB CONFIGURATION TRANSFER message, and the message includes a message type, a base station identifier, a supported TAI (Tracking Area Identity, tracking area identity), and so on. The sending the first configuration signaling message aims to query the address of a handover destination base station, that is, the second base station, from the MME.

After receiving the first configuration signaling message, namely the ENB CONFIGURATION TRANSFER message, the MME sends a first configuration signaling response message to the first base station, where the first configuration signaling response message may be an MME CONFIGURATION TRANSFER message, and the message includes a message type, an MME name, a supported PLMN (Public Land Mobile Network, public land mobile network), and the address of the second base station serving as the handover destination base station. In this way, the first base station is capable of determining the address of the second base station according to the MME CONFIGURATION TRANSFER message.

The MME sends a request signaling message to the second base station, where the request signaling message is used to notify the second base station of a request that the first base station needs to establish the X2 interface control plane.

After the second base station receives the request signaling message from the MME, the second base station sends a second configuration signaling message to the MME, where the sending the second configuration signaling message aims to query from the MME the address of the first base station serving as the handover source base station. After receiving the second configuration signaling message, the MME sends a second configuration signaling response message to the second base station, where the second configuration signaling response message includes the address of the first base station.

The first base station receives the first configuration signaling response message, namely the MME CONFIGURATION TRANSFER message, sent by the MME, and the second base station receives the second configuration signaling response message sent by the MME.

Then, the first base station sends a control plane establishment negotiation message to the second base station, aiming to query whether the second base station agrees to establish the X2 interface control plane. After receiving the control plane establishment negotiation message, the second base station sends a control plane establishment negotiation response message to the first base station, and the first base station receives the control plane establishment negotiation response message, where the control plane establishment negotiation response message carries a result about whether the second base station agrees to establish the X2 interface control plane.

If the second base station agrees with the establishment, the first base station and the second base station separately configure the X2 interface control plane, and the establishing the X2 interface control plane between the first base station and the second base station is completed; if the second base station does not agree with the establishment, the first base station sends the first configuration signaling message to the MME again, the MME reselects a destination base station, and the preceding steps are repeated.

In a radio network, the connection-oriented reliable stream control transmission protocol (Stream Control Transmission Protocol, SCTP for short) is generally used for a transmission bearer of signaling data. During establishing the X2 interface control plane, a SCTP association in an associated pair needs to be configured, that is, a SCTP association is configured between the first base station and the second base station.

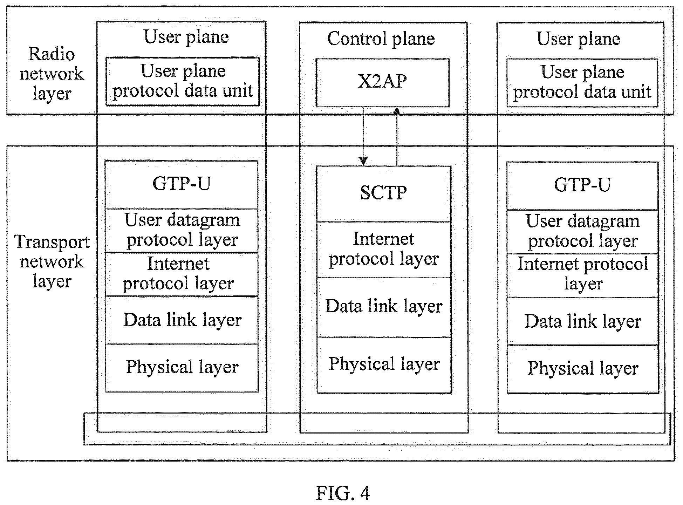

In this embodiment, the established X2 interface control plane may have at least the following three modes:
Mode 1: The X2 interface control plane between the first base station and the second base station has an X2AP entity on the radio network layer, and only one SCTP association pair is configured on a transport network layer between the first base station and the second base station, as shown in FIG. 4.

The X2AP (X2 application protocol) is a signaling protocol. An X2AP signaling message is used to establish an X2 interface user plane and control transmission of service data of users on respective user plane. As shown in FIG. 4, the corresponding protocol layers of the X2AP further include: an Internet protocol (Internet Protocol, IP for short) layer, a data link layer (Data link layer), and a physical layer (Physical Layer, PHY for short).

Data on the X2 control plane includes UE-related information and UE-unrelated information. To enable the X2 interface control plane to distinguish different operators in a same SCTP association pair, a SCTP stream identifier may be redefined to distinguish different operators to which different UEs belong, and UE-related signaling information of the UEs belonging to different operators is borne in a preallocated SCTP stream identifier of each operator; a pair of independent SCTP stream identifiers is allocated for inseparable data (UE-unrelated signaling messages). Stream Identifier is the SCTP stream identifier.

An SCTP stream is a unidirectional connection stream with 2¹⁶ - 1 = 65535 streams at most. The SCTP stream identifier may be allocated by adopting multiple methods. This embodiment provides a method for allocating the SCTP stream identifier.

Assume that there are N user equipments, a calculation method for homing of the M^{th} SCTP stream (M=1, ..., 65535, number 0 is reserved for public data transmission) is performing an modulo operation on M and N.

If M%N = 0, it is an SCTP stream of the first operator;
if M%N = 1, it is an SCTP stream of the second operator; ...,
if M%N = N - 1, it is an SCTP stream of the N^{th} operator.

Therefore, UEs of the operators may be distinguished by redefining the SCTP stream identifier.

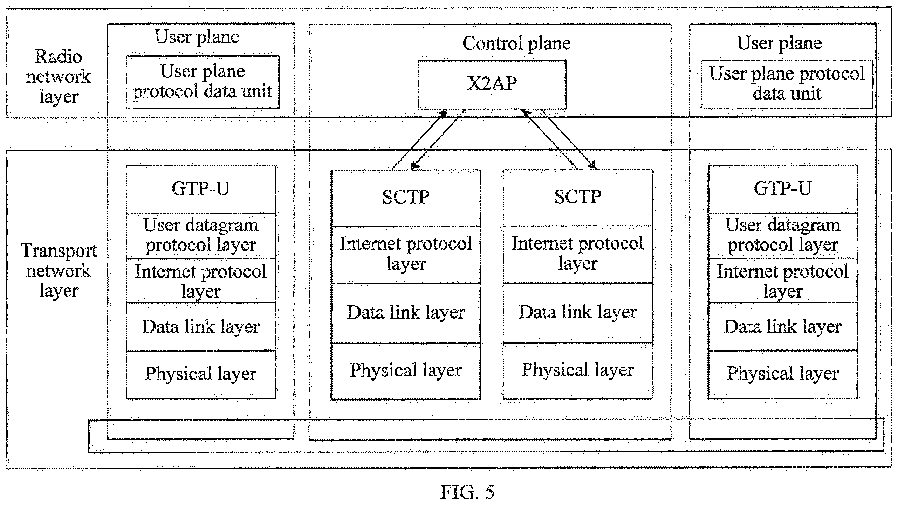

Mode 2: The X2 interface control plane between the first base station and the second base station has an X2AP entity on the radio network layer, and at least one SCTP association pair is configured on the transport network layer between the first base station and the second base station. The amount of the SCTP associations is at least identical with (that is, not smaller than) that of operators to ensure that each operator has a dedicated SCTP association, as shown in FIG. 5.

In this mode, when a user equipment of each operator is handed over, establishing an X2 interface control plane of each user is triggered, that is, signaling message exchange between an MME and a base station for the user is triggered, thereby establishing an X2 interface control plane corresponding to an operator. The first base station may enable, according to a PLMN-ID (a name of a field that is defined in the 3GPP36.423 protocol and is used to identify an operator) of an operator, UE-related signaling information of each operator to be borne in respective SCTP associations; multiple copies may be made for inseparable data (UE-unrelated signaling messages) and enter respective SCTP associations. Whether data is replicated is judged in the X2AP entity of the second base station, and then replicated data is combined. In addition, selective bearing may be performed for the inseparable data, that is, randomly specifying an SCTP association to bear UE-unrelated information, and when the first handed-over UE triggers the establishing the X2 interface control plane, all UE-unrelated messages are borne on this SCTP association.

Therefore, the amount of SCTP associations is at least identical with that of operators to ensure that each operator has a corresponding SCTP association pair.

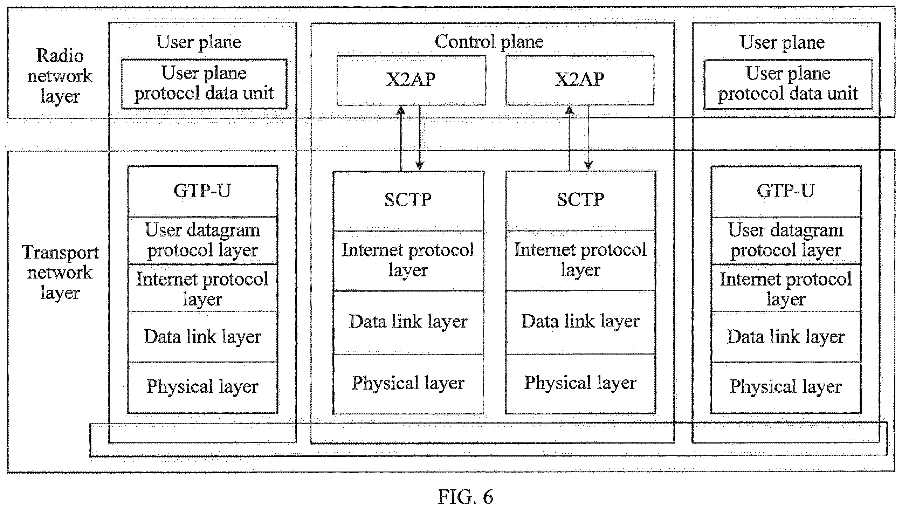

Mode 3: The X2 interface control plane between the first base station and the second base station has at least one X2AP entity on the radio network layer, and at least one SCTP association pair is configured on the transport network layer between the first base station and the second base station each. The X2AP entity has a one-to-one corresponding relationship with the SCTP association, and the amount of SCTP associations is at least identical with that of operators, as shown in FIG. 6.

A handover of a UE of each operator triggers establishing an X2 interface control plane of each operator, that is, when a user of a certain operator is handed over, signaling message exchange between an MME and a base station for the operator is triggered, thereby establishing an X2 interface control plane corresponding to the operator.

In this mode, each operator establishes X2AP entities thereof on the first base station and the second base station. The first base station may enable, according to a PLMN-ID of an operator, UE-related signaling information of each operator to be borne in respective SCTP associations. If each operator adopts respective frequencies/sectors in the first base station, UE-unrelated information of each operator is also different, and the first base station directly distinguishes the UE-unrelated information according to the PLMN-ID and enables the UE-unrelated information to be borne onto respective SCTP bearer. Multiple copies may be made for inseparable data (UE-unrelated signaling messages) and enter respective SCTP associations. Whether data is replicated is judged in the X2AP entity of the second base station, and then replicated data is combined. In addition, selective bearing may be performed for the inseparable data, that is, randomly specifying an SCTP association to bear the UE-unrelated information, and when the first handed-over UE triggers the establishing the X2 interface control plane, all UE-unrelated messages are borne on this SCTP association.

Step 102: On a transmission link of the X2 interface control plane, transfer an X2 interface user plane address of the first user equipment through signaling exchange between the first base station and the second base station, where the first user equipment is a subscriber of the first operator, and the X2 interface user plane address of the first user equipment belongs to a value range of the X2 interface user plane address assigned for the first operator.

After the X2 interface control plane is established, when a user is handed over, an X2 interface user plane corresponding to each user is established through signaling exchange between base stations. The following describes the process of the signaling exchange in detail:
The first base station sends a handover request message to the second base station, where the handover request message carries the X2 interface user plane address of the first user equipment, and the handover request message is a HANDOVER REQUEST message;
after receiving the handover request message HANDOVER REQUEST message, the second base station sends a handover request response message HANDOVER REQUEST ACKNOWLEDGE message to the first base station; and
the first base station receives the handover request response message.

The handover request message carries the X2 interface user plane address of the first user equipment that belongs to the first operator. Therefore, through the preceding signaling exchange, the second base station may know an operator for which an X2 interface user plane needs to be established.

To distinguish an X2 interface user plane of each operator, in this embodiment, handover request messages corresponding to different operators carry different X2 interface user plane addresses, that is, operators are distinguished through the X2 interface user plane addresses in the signaling messages.

An identifier that is defined in the 3GPP36.423 protocol and is used to distinguish different UEs is a base station application protocol identity (Evolved NodeB User Equipment X2 Application Protocol Identity, eNB UE X2AP ID for short). Therefore, to ensure that a corresponding X2 interface user plane is established for each operator, a rule for using the eNB UE X2AP ID may be redefined in this embodiment, that is, a format of the handover request message and that of the handover request response message are defined as follows:

| IE Name (information element name) | Presence (presence manner) | Range (range) | IE type and reference (information element type and reference) |
|---|---|---|---|
| eNB UE X2AP ID | M | | INTEGER (0..4095) |

By redefining the rule for using the eNB UE X2AP ID, corresponding value ranges of X2 interface user plane address may be assigned for the first operator and the second operator. The X2 interface user plane address of the first user equipment that belongs to the first operator is in the value range of X2 interface user plane address of the first operator, and an X2 interface user plane address of a second user equipment that belongs to the second operator is in the value range of X2 interface user plane address of the second operator. This ensures that a corresponding X2 interface user plane may be established for each operator according to the X2 interface user plane address carried in the handover request message.

Step 103: According to the value range of X2 interface user plane address to which the X2 interface user plane address of the first user equipment belongs, establish, between the first base station and the second base station, a first X2 interface user plane service bearer dedicated to the first operator.

After the X2 interface user plane address is determined, the first base station and the second base station triggers an X2 interface user plane establishment mechanism to establish the first X2 interface user plane service bearer dedicated to the first operator. Likewise, when the second equipment belonging to the second operator is handed over, a second X2 interface user plane service bearer dedicated to the second operator may be established between the first base station and the second base station. As shown in FIG. 4, FIG. 5, and FIG.6, related protocol layers of the user plane includes: a GPRS tunneling protocol for the user plane (General Packet Radio Service Tunneling Protocol for the user plane, GTP-U for short) layer, a user datagram protocol (User Datagram Protocol, UDP for short) layer, an Internet protocol (Internet Protocol, IP for short) layer, a data link layer (Data link layer), and a physical layer (Physical Layer, PHY for short).

During establishing the X2 interface user plane, when the amount of SCTP associations is greater than 1, that is, each operator uses a dedicated SCTP association thereof, signaling information of the first user equipment that belongs to the first operator and that of the second user equipment that belongs to the second operator may be borne on the SCTP association of the first operator and that of the second operator respectively according to the X2 interface user plane address.

Step 104: Transmit user data of the first user equipment on the established first X2 interface user plane service bearer.

After the first X2 interface user plane service bearer is established, the user data of the first user equipment is transmitted. For all user equipments belonging to the first operator, that is, user equipments with eNB UE X2AP IDs belonging to the value range of X2 interface user plane address of the first operator, user data is always transmitted by using the first X2 interface user plane service bearer; likewise, after the second X2 interface user plane service bearer dedicated to the second operator is established, for all user equipments belonging to the second operator, that is, user equipments with eNB UE X2AP IDs belonging to the value range of X2 interface user plane address of the second operator, user data is always transmitted by using the second X2 interface user plane service bearer. Through the preceding method, service data of each operator may enter a corresponding X2 interface user plane transmission bearer thereof, thereby implementing separation of service bearers between operators, greatly improving flexibility of a radio network, and facilitating operation and maintenance work of the operators.

According to the data transmission method in this embodiment, a dedicated X2 interface user plane service bearer is established for each operator and user data is transmitted by using the first X2 interface user plane service bearer for all user equipments belonging to the first operator. Through the preceding method, service data of each operator may enter a corresponding X2 interface user plane transmission bearer thereof, thereby implementing separation of service bearers between operators, greatly improving flexibility of a radio network, and facilitating operation and maintenance work of the operators. In addition, by establishing a dedicated SCTP association on the X2 interface control plane for each operator, each operator may use a dedicated SCTP association thereof to bear signaling information to control transmission of data on the X2 interface user plane, thereby implementing separation of each operator on the control plane.

### Embodiment 2

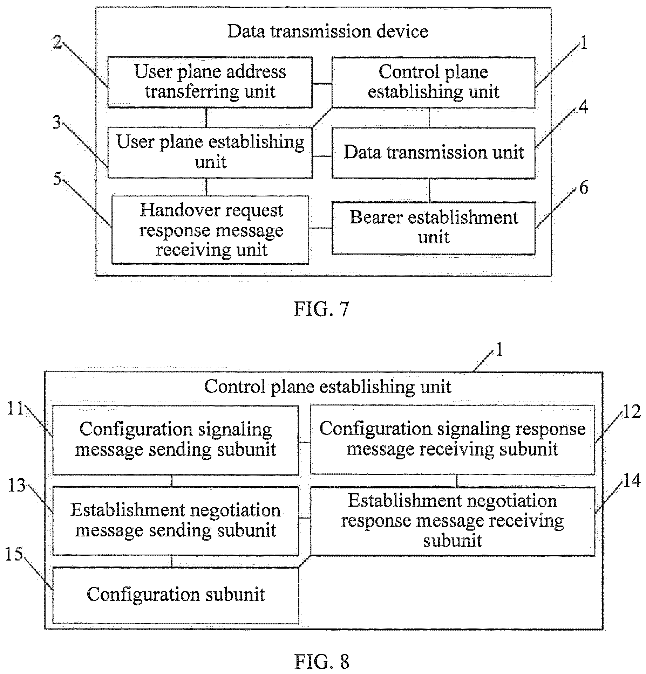

This embodiment provides a data transmission device, as shown in FIG. 3 and FIG. 7, including:
an X2 interface control plane establishing unit 1 disposed in a first base station, configured to cooperate with a second base station to establish an X2 interface control plane between the first base station and the second base station, where the first base station and the second base station are base station devices shared by a first operator and a second operator;
a user plane address transferring unit 2 disposed in the first base station, configured to, on a transmission link of the X2 interface control plane, transfer an X2 interface user plane address of a first user equipment, where the first user equipment is a subscriber of the first operator, and the X2 interface user plane address of the first user equipment belongs to a value range of X2 interface user plane address assigned for the first operator;
a user plane establishing unit 3 disposed in the first base station, configured to cooperate with the second base station to establish, between the first base station and the second base station according to the value range of X2 interface user plane address to which the X2 interface user plane address of the first user equipment belongs, a first X2 interface user plane service bearer dedicated to the first operator; and
a data transmission unit 4 disposed in the first base station, configured to transmit user data of the first user equipment to the second base station on the established first X2 interface user plane service bearer.

In this embodiment, the control plane establishing unit 1 may establish the X2 interface control plane through at least two methods: establishment through manual configuration and establishment by triggering a signaling message, where the establishing the X2 interface control plane by triggering a signaling message is applicable to a scenario where no X2 interface is configured between base stations. During establishing the X2 interface control plane through manual configuration, the first base station and the second base station of the X2 interface control plane need to be planned and a situation with multiple first base stations and second base stations needs to be considered. The X2 interface control planes of different operators are distinguished through (SourceIP@X, Destination IP@X), where X represents different operators.

The establishing the X2 interface control plane by triggering a signaling message may be performed when a user equipment is handed over. Each base station is connected to an MME of each operator. Therefore, when a user equipment is handed over, the establishing the X2 interface control plane may be triggered. The establishing the X2 interface control plane needs to be completed through signaling message exchange between the first base station serving as a handover source base station and the MME.

Optionally, the user plane address transferring unit 2 is specifically configured to: when the first user equipment is handed over, send a handover request message to the second base station, where the handover request message carries an X2 interface user plane address of the first user equipment.

As shown in FIG 7, the data transmission device may further include a handover request response message receiving unit 5, configured to receive a handover request response message that the second base station sends after receiving the handover request message.

The first base station sends the handover request message to the second base station through the user plane address transferring unit 2, where the handover request message carries the X2 interface user plane address of the first user equipment, and the handover request message is a HANDOVER REQUEST message;
after receiving the handover request message, namely the HANDOVER REQUEST message, the second base station sends the handover request response message, namely a HANDOVER REQUEST ACKNOWLEDGE message, to the first base station; and
the first base station receives the handover request response message through the handover request response message receiving unit 5. The handover request message carries the X2 interface user plane address of the first user equipment that belongs to the first operator. Therefore, through the preceding signaling exchange, the second base station may know an operator for which an X2 interface user plane needs to be established.

To distinguish an X2 interface user plane of each operator, in this embodiment, handover request messages corresponding to different operators carry different X2 interface user plane addresses, that is, operators are distinguished through the X2 interface user plane addresses in the signaling messages.

In this embodiment, a rule for using an eNB UE X2AP ID is redefined, that is, a format of the handover request message and that of the handover request response message are redefined. For the specific defining method, reference may be made to the method embodiment. By redefining the rule for using the eNB UE X2AP ID, corresponding value ranges of X2 interface user plane address may be assigned for the first operator and the second operator. The X2 interface user plane address of the first user equipment that belongs to the first operator is in the value range of X2 interface user plane address of the first operator, and an X2 interface user plane address of a second user equipment that belongs to the second operator is in the value range of X2 interface user plane address of the second operator. This ensures that a corresponding X2 interface user plane is established for each operator according to the X2 interface user plane address carried in the handover request message.

After the X2 interface user plane address is determined, the first base station and the second base station triggers an X2 interface user plane establishment mechanism to establish the first X2 interface user plane service bearer dedicated to the first operator. In addition, when the second equipment belonging to the second operator is handed over, a second X2 interface user plane service bearer dedicated to the second operator is established between the first base station and the second base station.

After the first X2 interface user plane service bearer is established, the user data of the first user equipment is transmitted. For all user equipments belonging to the first operator, that is, user equipments with eNB UE X2AP IDs belonging to the value range of X2 interface user plane address of the first operator, user data is transmitted by using the first X2 interface user plane service bearer; likewise, after the second X2 interface user plane service bearer dedicated to the second operator is established, for all user equipments belonging to the second operator, that is, user equipments with eNB UE X2AP IDs belonging to the value range of X2 interface user plane address of the second operator, user data is transmitted by using the second X2 interface user plane service bearer. Through the preceding method, service data of each operator may enter a corresponding X2 interface user plane transmission bearer thereof, thereby implementing separation of service bearers between operators, greatly improving flexibility of a radio network, and facilitating operation and maintenance work of the operators.

As shown in FIG. 8, optionally, the control plane establishing unit 1 in this embodiment may include:
a configuration signaling message sending subunit 11, configured to, when the first user equipment is handed over, send a first configuration signaling message to an MME;
a configuration signaling response message receiving subunit 12, configured to receive a first configuration signaling response message that the MME sends after receiving the first configuration signaling message, where the first configuration signaling response message includes an address of the second base station serving as a handover destination base station;
an establishment negotiation message sending subunit 13, configured to send a control plane establishment negotiation message to the second base station;
an establishment negotiation response message receiving subunit 14, configured to receive a control plane establishment negotiation response message that the second base station sends after receiving the control plane establishment negotiation message; and
a configuration subunit 15, configured to configure an X2 interface control plane of the first base station.

The specific process of establishing the X2 interface control plane in this embodiment is similar to that in the first embodiment, and therefore is not described here.

In this embodiment, the established X2 interface control plane may have at least the following three modes:
Mode 1: The X2 interface control plane between the first base station and the second base station has an X2AP entity on a radio network layer, and only one SCTP association pair is configured on a transport network layer between the first base station and the second base station, as shown in FIG. 4.

Data on the X2 control plane includes UE-related information and UE-unrelated information. To enable the X2 interface control plane to distinguish different operators in a same SCTP association pair, a SCTP stream identifier may be redefined to distinguish an operator to which some UEs belong, and UE-related signaling information belonging to different operators is borne in a preallocated SCTP stream identifier of each operator; a pair of independent SCTP stream identifiers is allocated for inseparable data (UE-unrelated signaling messages).

Mode 2: The X2 interface control plane between the first base station and the second base station has an X2AP entity on the radio network layer, and at least one SCTP association pair is configured on the transport network layer between the first base station and the second base station. The amount of SCTP associations is at least identical with that of operators to ensure that each operator has a dedicated SCTP association, as shown in FIG. 5.

In this mode, when a user equipment of each operator is handed over, establishing an X2 interface control plane of each user is triggered, that is, signaling message exchange between an MME and a base station for the user is triggered, thereby establishing an X2 interface control plane corresponding to an operator. The first base station may enable, according to a PLMN-ID (a name of a field that is defined in the 3GPP36.423 protocol and is used to identify an operator) of an operator, UE-related signaling information of each operator to be borne in respective SCTP associations; many copies may be made for inseparable data (UE-unrelated signaling messages) and enter respective SCTP associations. Whether data is replicated is judged in the X2AP entity of the second base station, and then replicated data is combined. In addition, selective bearing may be performed for the inseparable data, that is, randomly specifying an SCTP association to bear UE-unrelated information, and when the first handed-over UE triggers the establishing the X2 interface control plane, all UE-unrelated messages are borne on this SCTP association.

Therefore, the amount of SCTP associations is at least identical with that of operators to ensure that each operator has a corresponding SCTP association pair.

Mode 3: The X2 interface control plane between the first base station and the second base station has at least one X2AP entity on the radio network layer, and at least one SCTP association pair is configured on the transport network layer between the first base station and the second base station each. The X2AP entity has a one-to-one corresponding relationship with the SCTP association, and the amount of SCTP associations is at least identical with that of operators, as shown in FIG. 6.

A handover of a UE of each operator triggers establishing an X2 interface control plane of each operator, that is, when a user of a certain operator is handed over, signaling message exchange between an MME and a base station for the operator is triggered, thereby establishing an X2 interface control plane corresponding to the operator.

In this mode, each operator establishes X2AP entities thereof on the first base station and the second base station. The first base station may enable, according to a PLMN-ID of an operator, UE-related signaling information of each operator to be borne in respective SCTP associations. If each operator adopts respective frequencies/sectors in the first base station, UE-unrelated information of each operator is also different, and the first base station directly distinguishes the UE-unrelated information according to the PLMN-ID and enables the UE-unrelated information to be borne onto respective SCTP bearers. Multiple copies may be made for inseparable data (UE-unrelated signaling messages) and enter respective SCTP associations. Whether data is replicated is judged in the X2AP entity of the second base station, and then replicated data is combined. In addition, selective bearing may be performed for the inseparable data, that is, randomly specifying an SCTP association to bear the UE-unrelated information, and when the first handed-over UE triggers the establishing the X2 interface control plane, all UE-unrelated messages are borne on this SCTP association.

The data transmission device in this embodiment further includes: a bearer establishment unit 6, configured to: when the amount of SCTP associations is greater than 1, enable signaling information of the first user equipment that belongs to the first operator and that of the second user equipment that belongs to the second operator to be borne on the SCTP association of the first operator and that of the second operator respectively according to the X2 interface user plane address.

The work process of each unit in this embodiment is similar to that in the method embodiment, and therefore is not described here.

The data transmission device in this embodiment establishes a dedicated X2 interface user plane service bearer for each operator through the user plane establishing unit and transmits user data by using the first X2 interface user plane service bearer for all user equipments belonging to the first operator. In this way, service data of each operator may enter a corresponding X2 interface user plane transmission bearer thereof, thereby implementing separation of service bearers between operators, greatly improving flexibility of a radio network, and facilitating operation and maintenance work of the operators. In addition, by establishing, by the control plane establishing unit, a dedicated SCTP association on the X2 interface control plane for each operator, each operator may use a dedicated SCTP association thereof to bear signaling information to control transmission of data on the X2 interface user plane, thereby implementing separation of each operator on the control plane.

### Embodiment 3

This embodiment provides a data transmission system, including the data transmission device in Embodiment 2, where the data transmission device is disposed in a first base station. The data transmission system in this embodiment further includes: a second base station communicating with the first base station through an X2 interface.

The data transmission system in this embodiment further includes an MME, configured to:
after receiving a first configuration signaling message from the first base station, send a first configuration signaling response message to the first base station, where the first configuration signaling response message includes an address of the second base station serving as a handover destination base station;
send a request signaling message to the second base station, where the request signaling message is used to notify the second base station of a request that the first base station needs to establish an X2 interface control plane; and
after receiving a second configuration signaling message from the second base station, send a second configuration signaling response message to the second base station, where the second configuration signaling response message includes an address of the first base station.

The work processes of the first base station, the second base station, and the MME in the data transmission system in this embodiment are similar to those in the method embodiment, and therefore are not described here.

The data transmission system in this embodiment establishes a dedicated X2 interface user plane service bearer for each operator through a user plane establishing unit and transmits user data by using the first X2 interface user plane service bearer for all user equipments belonging to the first operator. In this way, service data of each operator may enter a corresponding X2 interface user plane transmission bearer thereof, thereby implementing separation of service bearers between operators, greatly improving flexibility of a radio network, and facilitating operation and maintenance work of the operators. In addition, by establishing, by the control plane establishing unit, a dedicated SCTP association on the X2 interface control plane for each operator, each operator may use a dedicated SCTP association thereof to bear signaling information to control transmission of data on the X2 interface user plane, thereby implementing separation of each operator on the control plane.

In the present invention, for the descriptions about the device and system embodiments and the description about the method embodiment, reference may be made to each other. The processes and steps described in the embodiments of the present invention may be performed and implemented by corresponding functional units or entity modules of a network device.

Through the preceding description about implementation manners, a person skilled in the art may clearly know that the present invention may be implemented by software and necessary universal hardware or completely by the hardware. In many situations, however, the former implementation manner is better. Based on such understanding, the technical solutions in the present invention may be essentially or the part that contributes to the prior art may be embodied in the form of a software product. The computer software product may be stored in a readable storage medium, for example, a floppy disk, a hard disk, or a CD-ROM of a computer, including several instructions used to enable a computer device (for example, a personal computer, a server, or a network device) to implement the method described in each embodiment of the present invention.

## Claims

1. A data transmission method, **characterized by** comprising:
establishing (101) an X2 interface control plane between a first base station and a second base station, wherein the first base station and the second base station are base stations shared by a first operator and a second operator;
on a transmission link of the X2 interface control plane, transferring (102) an X2 interface user plane address of a first user equipment through signaling exchange between the first base station and the second base station, wherein the first user equipment is a subscriber of the first operator, and the X2 interface user plane address of the first user equipment belongs to a value range of X2 interface user plane address assigned for the first operator;
according to the value range of X2 interface user plane address, establishing (103), between the first base station and the second base station, a first X2 interface user plane service bearer dedicated to the first operator; and
transmitting (104) user data of the first user equipment on the established first X2 interface user plane service bearer.

2. The data transmission method according to claim 1, wherein the transferring the X2 interface user plane address of the first user equipment through signaling exchange between the first base station and the second base station comprises:
when the first user equipment is handed over, sending, by the first base station, a handover request message to the second base station, wherein the handover request message carries the X2 interface user plane address of the first user equipment;
receiving, by the second base station, the handover request message, and sending a handover request response message to the first base station; and
receiving, by the first base station, the handover request response message.

3. The data transmission method according to claim 1, wherein the X2 interface user plane address is an Evolved NodeB User Equipment X2 Application Protocol Identity, end USE X2AP ID.

4. The data transmission method according to claim 1, wherein the establishing the X2 interface control plane between the first base station and the second base station comprises:
when the first user equipment is handed over, sending, by the first base station serving as a handover source base station, a first configuration signaling message to an MME;
receiving, by the first base station, a first configuration signaling response message from a mobility management entity, MME, wherein the first configuration signaling response message comprises an address of the second base station serving as a handover destination base station;
receiving, by the second base station, a request signaling message from the MME, wherein the request signaling message is used to notify the second base station of a request that the first base station needs to establish the X2 interface control plane;
sending, by the second base station, a second configuration signaling message to the MME, and receiving, by the second base station after sending the second configuration signaling message, a second configuration signaling response message from the MME, wherein the second configuration signaling response message comprises an address of the first base station;
receiving, by the first base station, the first configuration signaling response message sent by the MME, and receiving, by the second base station, the second configuration signaling response message sent by the MME;
sending, by the first base station, a control plane establishment negotiation message to the second base station, sending, by the second base station after receiving the control plane establishment negotiation message, a control plane establishment negotiation response message to the first base station, and receiving, by the first base station, the control plane establishment negotiation response message; and
configuring, separately by the first base station and the second base station, the X2 interface control plane, and completing the establishment of the X2 interface control plane between the first base station and the second base station.

5. The data transmission method according to any one of claims 1 to 4, wherein:
the X2 interface control plane between the first base station and the second base station has an X2AP entity on a radio network layer, and only one SCTP association is configured on a transport network layer between the first base station and the second base station; or
the X2 interface control plane between the first base station and the second base station has an X2AP entity on a radio network layer, at least one SCTP association is configured on the transport network layer between the first base station and the second base station, the amount of the at least one SCTP association is identical with the amount of operators, and each of the operators has a corresponding SCTP association.

6. The data transmission method according to claim 5, further comprising:
when only one SCTP association is configured on the transport network layer, enabling signaling information of the first user equipment and signaling information of a second user equipment that belongs to the second operator to be borne on the only one SCTP association, wherein a SCTP stream identifier is used to distinguish different operators to which the first user equipment and the second user equipment belong, wherein the signaling information of the first user equipment is signaling information related to the first user equipment and the signaling information of the second user equipment is signaling information related to the second user equipment.

7. The data transmission method according to claim 5, further comprising:
when at least one SCTP association is configured on the transport network layer, enabling signaling information of the first user equipment to be borne on the corresponding SCTP, association of the first operator, and signaling information of a second user equipment that belongs to the second operator to be borne on the corresponding SCTP association of the second operator according to the X2 interface user plane address, wherein the signaling information of the first user equipment is signaling information related to the first user equipment and the signaling information of the second user equipment is signaling information related to the second user equipment.

8. A data transmission device, **characterized by** comprising:
a control plane establishing unit (1) disposed in a first base station, configured to cooperate with a second base station to establish an X2 interface control plane between the first base station and the second base station, wherein the first base station and the second base station are base stations shared by a first operator and a second operator;
a user plane address transferring unit (2) disposed in the first base station, configured to, on a transmission link of the X2 interface control plane, transfer an X2 interface user plane address of a first user equipment, wherein the first user equipment is a subscriber of the first operator, and the X2 interface user plane address of the first user equipment belongs to a value range of X2 interface user plane address assigned for the first operator;
a user plane establishing unit (3) disposed in the first base station, configured to cooperate with the second base station to establish, between the first base station and the second base station according to the value range of X2 interface user plane address, a first X2 interface user plane service bearer dedicated to the first operator; and
a data transmission unit (4) disposed in the first base station, configured to transmit user data of the first user equipment to the second base station on the established first X2 interface user plane service bearer.

9. The data transmission device according to claim 8, wherein the user plane address transferring unit is specifically configured to: when the first user equipment is handed over, send a handover request message to the second base station, wherein the handover request message carries the X2 interface user plane address of the first user equipment; and
the device further comprises a handover request response message receiving unit (5), configured to receive a handover request response message that the second base station sends after receiving the handover request message.

10. The data transmission device according to claim 8, wherein the X2 interface user plane address is an Evolved NodeB User Equipment X2 Application Protocol Identity, eNB UE X2AP ID.

11. The data transmission device according to claim 8, wherein the control plane establishing unit further comprising:
a configuration signaling message sending subunit (11), configured to, when the first user equipment is handed over, send a first configuration signaling message to an MME;
a configuration signaling response message receiving subunit (12), configured to receive a first configuration signaling response message that the MME sends after receiving the first configuration signaling message, wherein the first configuration signaling response message comprises an address of the second base station serving as a handover destination base station;
an establishment negotiation message sending subunit (13), configured to send a control plane establishment negotiation message to the second base station;
an establishment negotiation response message receiving subunit (14), configured to receive a control plane establishment negotiation response message that the second base station sends after receiving the control plane establishment negotiation message; and
a configuration subunit (15), configured to configure the X2 interface control plane of the first base station.

12. The data transmission device according to any one of claims 8 to 11, wherein:
the X2 interface control plane between the first base station and the second base station has an X2AP entity on a radio network layer, and only one SCTP, association is configured on a transport network layer between the first base station and the second base station; or
the X2 interface control plane between the first base station and the second base station has an X2AP entity on a radio network layer, and at least one SCTP association is configured on the transport network layer between the first base station and the second base station, the amount of the at least one SCTP association is identical with the amount of operators, and each of the operators has a corresponding SCTP association.

13. The data transmission device according to claim 12, further comprising: a bearer establishment unit (6), configured to: when only one SCTP association is configured on the transport network layer, enable signaling information of the first user equipment and signaling information of a second user equipment that belongs to the second operator to be borne on the only one SCTP association, wherein a SCTP, stream identifier is used to distinguish different operators to which the first user equipment and the second user equipment belong, wherein the signaling information of the first user equipment is signaling information related to the first user equipment and the signaling information of the second user equipment is signaling information related to the second user equipment.

14. The data transmission device according to claim 12, further comprising: a bearer establishment unit, configured to: when at least one SCTP association is configured on the transport network layer, enable signaling information of the first user equipment to be borne on the corresponding SCTP association of the first operator, and signaling information of the second user equipment that belongs to the second operator to be borne on the corresponding SCTP association of the second operator respectively according to the X2 interface user plane address, wherein the signaling information of the first user equipment is signaling information related to the first user equipment and the signaling information of the second user equipment is signaling information related to the second user equipment.

15. A data transmission system, **characterized by** comprising the data transmission device according to any one of claims 8 to 14, wherein the data transmission device is disposed in the first base station, and the system further comprises: the second base station communicating with the first base station through an X2 interface.

## Patentansprüche

1. Datenübertragungsverfahren, **dadurch gekennzeichnet, dass** es umfasst:
Einrichten (101) einer X2-Schnittstellensteuerebene zwischen einer ersten Basisstation und einer zweiten Basisstation, wobei die erste Basisstation und die zweite Basisstation Basisstationen sind, die von einem ersten Operator und einem zweiten Operator gemeinsam verwendet werden;
Übermitteln (102), auf einer Übertragungsverbindung der X2-Schnittstellensteuerebene, einer X2-Schnittstellenbenutzerebenenadresse einer ersten Benutzerausrüstung durch Signalisierungsaustausch zwischen der ersten Basisstation und der zweiten Basisstation, wobei die erste Benutzerausrüstung ein Teilnehmer des ersten Operators ist und die X2-Schnittstellenbenutzerebenenadresse der ersten Benutzerausrüstung zu einem Wertebereich einer X2-Schnittstellenbenutzerebenenadresse gehört, die für den ersten Operator zugewiesen ist;
Einrichten (103), gemäß dem Wertebereich einer X2-Schnittstellenbenutzerebenenadresse, eines speziell für den ersten Operator vorgesehenen ersten X2-Schnittstellenbenutzerebenen-Dienstträgers zwischen der ersten Basisstation und der zweiten Basisstation; und
Übertragen (104) von Benutzerdaten der ersten Benutzerausrüstung auf dem eingerichteten ersten X2-Schnittstellenbenutzerebenen-Dienstträger.

2. Datenübertragungsverfahren nach Anspruch 1, wobei das Übermitteln der X2-Schnittstellenbenutzerebenenadresse der ersten Benutzerausrüstung durch Signalisierungsaustausch zwischen der ersten Basisstation und der zweiten Basisstation umfasst:
wenn die erste Benutzerausrüstung übergeben wird, Senden, durch die erste Basisstation, einer Übergabeanforderungsnachricht an die zweite Basisstation, wobei die Übergabeanforderungsnachricht die X2-Schnittstellenbenutzerebenenadresse der ersten Benutzerausrüstung trägt;
Empfangen, durch die zweite Basisstation, der Übergabeanforderungsnachricht und Senden einer Übergabeanforderungsantwortnachricht an die erste Basisstation; und
Empfangen, durch die erste Basisstation, der Übergabeanforderungsantwortnachricht.

3. Datenübertragungsverfahren nach Anspruch 1, wobei die X2-Schnittstellenbenutzerebenenadresse eine X2-Anwendungsprotokollidentität einer Benutzerausrüstung eines entwickelten NodeB, eNB UE X2AP ID, ist.

4. Datenübertragungsverfahren nach Anspruch 1, wobei das Einrichten der X2-Schnittstellensteuerebene zwischen der ersten Basisstation und der zweiten Basisstation umfasst:
wenn die erste Benutzerausrüstung übergeben wird, Senden, durch die erste Basisstation, die als eine Übergabeursprung-Basisstation dient, einer ersten Konfigurationssignalisierungsnachricht an eine MME;
Empfangen, durch die erste Basisstation, einer ersten Konfigurationssignalisierung-Antwortnachricht von einer Mobilitätsverwaltungsentität, MME, wobei die erste Konfigurationssignalisierung-Antwortnachricht eine Adresse der zweiten Basisstation, die als eine Übergabeziel-Basisstation dient, umfasst;
Empfangen, durch die zweite Basisstation, einer Anforderungssignalisierungsnachricht von der MME, wobei die Anforderungssignalisierungsnachricht verwendet wird, die zweite Basisstation über eine Anforderung zu benachrichtigen, dass die erste Basisstation die X2-Schnittstellensteuerebene einrichten muss;
Senden, durch die zweite Basisstation, einer zweiten Konfigurationssignalisierungsnachricht an die MME und Empfangen, durch die zweite Basisstation nach Senden der zweiten Konfigurationssignalisierungsnachricht, einer zweiten Konfigurationssignalisierung-Antwortnachricht von der MME, wobei die zweite Konfigurationssignalisierung-Antwortnachricht eine Adresse der ersten Basisstation umfasst;
Empfangen, durch die erste Basisstation, der durch die MME gesandten ersten Konfigurationssignalisierung-Antwortnachricht und Empfangen, durch die zweite Basisstation, der durch die MME gesandten zweiten Konfigurationssignalisierung-Antwortnachricht;
Senden, durch die erste Basisstation, einer Steuerebeneneinrichtung-Aushandlungsnachricht an die zweite Basisstation, Senden, durch die zweite Basisstation nach Empfangen der Steuerebeneneinrichtung-Aushandlungsnachricht, einer Steuerebeneneinrichtung-Aushandlungsantwortnachricht an die erste Basisstation und Empfangen, durch die erste Basisstation, der Steuerebeneneinrichtung-Aushandlungsantwortnachricht; und
Konfigurieren, getrennt durch die erste Basisstation und die zweite Basisstation, der X2-Schnittstellensteuerebene und Vervollständigen der Einrichtung der X2-Schnittstellensteuerebene zwischen der ersten Basisstation und der zweiten Basisstation.

5. Datenübertragungsverfahren nach einem der Ansprüche 1 bis 4, wobei:
die X2-Schnittstellensteuerebene zwischen der ersten Basisstation und der zweiten Basisstation eine X2AP-Entität auf einer Funknetzwerkschicht aufweist und nur eine SCTP-Assoziation auf einer Transportnetzwerkschicht zwischen der ersten Basisstation und der zweiten Basisstation konfiguriert ist; oder
die X2-Schnittstellensteuerebene zwischen der ersten Basisstation und der zweiten Basisstation eine X2AP-Entität auf einer Funknetzwerkschicht aufweist, mindestens eine SCTP-Assoziation auf der Transportnetzwerkschicht zwischen der ersten Basisstation und der zweiten Basisstation konfiguriert ist, der Betrag der mindestens einen SCTP-Assoziation mit dem Betrag von Operatoren identisch ist und jeder der Operatoren eine korrespondierende SCTP-Assoziation aufweist.

6. Datenübertragungsverfahren nach Anspruch 5, ferner umfassend:
wenn nur eine SCTP-Assoziation auf der Transportnetzwerkschicht konfiguriert ist, Freigeben von Signalisierungsinformationen der ersten Benutzerausrüstung und Signalisierungsinformationen einer zweiten Benutzerausrüstung, die zu dem zweiten Operator gehört, auf der nur einen SCTP-Assoziation getragen zu werden, wobei eine SCTP-Stromkennung verwendet wird, zwischen verschiedenen Operatoren, zu denen die erste Benutzerausrüstung und die zweite Benutzerausrüstung gehören, zu unterscheiden, wobei die Signalisierungsinformationen der ersten Benutzerausrüstung mit der ersten Benutzerausrüstung in Beziehung stehende Signalisierungsinformationen sind und die Signalisierungsinformationen der zweiten Benutzerausrüstung mit der zweiten Benutzerausrüstung in Beziehung stehende Signalisierungsinformationen sind.

7. Datenübertragungsverfahren nach Anspruch 5, ferner umfassend:
wenn mindestens eine SCTP-Assoziation auf der Transportnetzwerkschicht konfiguriert ist, Freigeben von Signalisierungsinformationen der ersten Benutzerausrüstung, auf der korrespondierenden SCTP-Assoziation des ersten Operators getragen zu werden, und Signalisierungsinformationen der zweiten Benutzerausrüstung, die zu dem zweiten Operator gehört, auf der korrespondierenden SCTP-Assoziation des zweiten Operators gemäß der X2-Schnittstellenbenutzerebenenadresse getragen zu werden, wobei die Signalisierungsinformationen der ersten Benutzerausrüstung mit der ersten Benutzerausrüstung in Beziehung stehende Signalisierungsinformationen sind und die Signalisierungsinformationen der zweiten Benutzerausrüstung mit der zweiten Benutzerausrüstung in Beziehung stehende Signalisierungsinformationen sind.

8. Datenübertragungsvorrichtung, **dadurch gekennzeichnet, dass** sie umfasst:
eine Steuerebeneneinrichtungseinheit (1), angeordnet in einer ersten Basisstation, konfiguriert zum Kooperieren mit einer zweiten Basisstation zum Einrichten einer X2-Schnittstellensteuerebene zwischen der ersten Basisstation und der zweiten Basisstation, wobei die erste Basisstation und die zweite Basisstation Basisstationen sind, die von einem ersten Operator und einem zweiten Operator gemeinsam verwendet werden;
eine Benutzerebenenadressen-Übermittlungseinheit (2), angeordnet in der ersten Basisstation, konfiguriert zum Übermitteln, auf einer Übertragungsverbindung der X2-Schnittstellensteuerebene, einer X2-Schnittstellenbenutzerebenenadresse einer ersten Benutzerausrüstung, wobei die erste Benutzerausrüstung ein Teilnehmer des ersten Operators ist und die X2-Schnittstellenbenutzerebenenadresse der ersten Benutzerausrüstung zu einem Wertebereich einer X2-Schnittstellenbenutzerebenenadresse gehört, die für den ersten Operator zugewiesen ist;
eine Benutzerebenen-Einrichtungseinheit (3), angeordnet in der ersten Basisstation, konfiguriert zum Kooperieren mit der zweiten Basisstation zum Einrichten, gemäß dem Wertebereich einer X2-Schnittstellenbenutzerebenenadresse, eines speziell für den ersten Operator vorgesehenen ersten X2-Schnittstellenbenutzerebenen-Dienstträgers zwischen der ersten Basisstation und der zweiten Basisstation; und
eine Datenübertragungseinheit (4), angeordnet in der ersten Basisstation, konfiguriert zum Übertragen von Benutzerdaten der ersten Benutzerausrüstung auf dem eingerichteten ersten X2-Schnittstellenbenutzerebenen-Dienstträger an die zweite Basisstation.

9. Datenübertragungsvorrichtung nach Anspruch 8, wobei die Benutzerebenenadressen-Übermittlungseinheit spezifisch konfiguriert ist zum: wenn die erste Benutzerausrüstung übergeben wird, Senden einer Übergabeanforderungsnachricht an die zweite Basisstation, wobei die Übergabeanforderungsnachricht die X2-Schnittstellenbenutzerebenenadresse der ersten Benutzerausrüstung trägt; und wobei die Vorrichtung ferner eine Übergabeanforderungsantwortnachricht-Empfangseinheit (5) umfasst, konfiguriert zum Empfangen einer Übergabeanforderungsantwortnachricht, die die zweite Basisstation nach Empfangen der Übergabeanforderungsnachricht sendet.

10. Datenübertragungsvorrichtung nach Anspruch 8, wobei die X2-Schnittstellenbenutzerebenenadresse eine X2-Anwendungsprotokollidentität einer Benutzerausrüstung eines entwickelten NodeB, eNB UE X2AP ID, ist.

11. Datenübertragungsvorrichtung nach Anspruch 8, wobei die Steuerebeneneinrichtungseinheit ferner umfasst:
eine Konfigurationssignalisierungsnachricht-Sendeuntereinheit (11), konfiguriert zum, wenn die erste Benutzerausrüstung übergeben wird, Senden einer ersten Konfigurationssignalisierungsnachricht an eine MME;
eine Konfigurationssignalisierung-Antwortnachricht-Empfangsuntereinheit (12), konfiguriert zum Empfangen einer ersten Konfigurationssignalisierung-Antwortnachricht, die die MME nach Empfangen der ersten Konfigurationssignalisierungsnachricht sendet, wobei die erste Konfigurationssignalisierung-Antwortnachricht eine Adresse der zweiten Basisstation, die als eine Übergabeziel-Basisstation dient, umfasst;
eine Einrichtungsaushandlungsnachricht-Sendeuntereinheit (13), konfiguriert zum Senden einer Steuerebeneneinrichtung-Aushandlungsnachricht an die zweite Basisstation;
eine Einrichtungsaushandlungsantwortnachricht-Empfangsuntereinheit (14), konfiguriert zum Empfangen einer Steuerebeneneinrichtung-Aushandlungsantwortnachricht, die die zweite Basisstation nach Empfangen der Steuerebeneneinrichtung-Aushandlungsnachricht sendet; und
eine Konfigurationsuntereinheit (15), konfiguriert zum Konfigurieren der X2-Schnittstellensteuerebene der ersten Basisstation.

12. Datenübertragungsvorrichtung nach einem der Ansprüche 8 bis 11, wobei:
die X2-Schnittstellensteuerebene zwischen der ersten Basisstation und der zweiten Basisstation eine X2AP-Entität auf einer Funknetzwerkschicht aufweist und nur eine SCTP-Assoziation auf einer Transportnetzwerkschicht zwischen der ersten Basisstation und der zweiten Basisstation konfiguriert ist; oder
die X2-Schnittstellensteuerebene zwischen der ersten Basisstation und der zweiten Basisstation eine X2AP-Entität auf einer Funknetzwerkschicht aufweist und mindestens eine SCTP-Assoziation auf der Transportnetzwerkschicht zwischen der ersten Basisstation und der zweiten Basisstation konfiguriert ist, der Betrag der mindestens einen SCTP-Assoziation mit dem Betrag von Operatoren identisch ist und jeder der Operatoren eine korrespondierende SCTP-Assoziation aufweist.

13. Datenübertragungsvorrichtung nach Anspruch 12, ferner umfassend: eine Trägereinrichtungseinheit (6), konfiguriert zum: wenn nur eine SCTP-Assoziation auf der Transportnetzwerkschicht konfiguriert ist, Freigeben von Signalisierungsinformationen der ersten Benutzerausrüstung und Signalisierungsinformationen einer zweiten Benutzerausrüstung, die zu dem zweiten Operator gehört, auf der nur einen SCTP-Assoziation getragen zu werden, wobei eine SCTP-Stromkennung verwendet wird, zwischen verschiedenen Operatoren, zu denen die erste Benutzerausrüstung und die zweite Benutzerausrüstung gehören, zu unterscheiden, wobei die Signalisierungsinformationen der ersten Benutzerausrüstung mit der ersten Benutzerausrüstung in Beziehung stehende Signalisierungsinformationen sind und die Signalisierungsinformationen der zweiten Benutzerausrüstung mit der zweiten Benutzerausrüstung in Beziehung stehende Signalisierungsinformationen sind.

14. Datenübertragungsvorrichtung nach Anspruch 12, ferner umfassend: eine Trägereinrichtungseinheit, konfiguriert zum: wenn mindestens eine SCTP-Assoziation auf der Transportnetzwerkschicht konfiguriert ist, Freigeben von Signalisierungsinformationen der ersten Benutzerausrüstung, auf der korrespondierenden SCTP-Assoziation des ersten Operators getragen zu werden, und Signalisierungsinformationen der zweiten Benutzerausrüstung, die zu dem zweiten Operator gehört, auf der korrespondierenden SCTP-Assoziation des zweiten Operators gemäß der X2-Schnittstellenbenutzerebenenadresse getragen zu werden, wobei die Signalisierungsinfbrmationen der ersten Benutzerausrüstung mit der ersten Benutzerausrüstung in Beziehung stehende Signalisierungsinformationen sind und die Signalisierungsinformationen der zweiten Benutzerausrüstung mit der zweiten Benutzerausrüstung in Beziehung stehende Signalisierungsinformationen sind.

15. Datenübertragungssystem, **gekennzeichnet durch** Umfassen der Datenübertragungsvorrichtung nach einem der Ansprüche 8 bis 14, wobei die Datenübertragungsvorrichtung in der ersten Basisstation angeordnet ist, und das System ferner umfassend: die zweite Basisstation, die durch eine X2-Schnittstelle mit der ersten Basisstation kommuniziert.

## Revendications

1. Procédé de transmission de données, **caractérisé en ce qu'**il comprend de :
établir (101) un plan de commande d'interface X2 entre une première station de base et une seconde station de base, dans lequel la première station de base et la seconde station de base sont des stations de base partagées par un premier opérateur et un second opérateur ;
sur une liaison de transmission du plan de commande d'interface X2, transférer (102) une adresse de plan utilisateur d'interface X2 d'un premier équipement utilisateur par l'intermédiaire d'un échange de signalisation entre la première station de base et la seconde station de base, dans lequel le premier équipement utilisateur est un abonné du premier opérateur, et l'adresse de plan utilisateur d'interface X2 du premier équipement utilisateur appartient à une plage de valeurs de l'adresse de plan utilisateur d'interface X2 attribuée au premier opérateur ;
selon la plage de valeurs de l'adresse de plan utilisateur d'interface X2, établir (103), entre la première station de base et la seconde station de base, un premier support de service de plan utilisateur d'interface X2 dédié au premier opérateur ; et
transmettre (104) des données d'utilisateur du premier équipement utilisateur sur le premier support de service de plan utilisateur d'interface X2 établi.

2. Procédé de transmission de données selon la revendication 1, dans lequel le transfert de l'adresse de plan utilisateur d'interface X2 du premier équipement utilisateur par l'intermédiaire d'un échange de signalisation entre la première station de base et la seconde station de base comprend de :
lorsque le premier équipement utilisateur est transféré, envoyer, par la première station de base, un message de demande de transfert à la seconde station de base, dans lequel le message de demande de transfert contient l'adresse de plan utilisateur d'interface X2 du premier équipement utilisateur ;
recevoir, par la seconde station de base, le message de demande de transfert, et envoyer un message de réponse de demande de transfert à la première station de base ; et
recevoir, par la première station de base, le message de réponse de demande de transfert.

3. Procédé de transmission de données selon la revendication 1, dans lequel l'adresse de plan utilisateur d'interface X2 est une identité de protocole d'application X2 d'équipement utilisateur de NodeB évolué, eNB UE X2AP ID.

4. Procédé de transmission de données selon la revendication 1, dans lequel l'établissement du plan de commande d'interface X2 entre la première station de base et la seconde station de base comprend de :
lorsque le premier équipement utilisateur est transféré, envoyer, par la première station de base servant de station de base source de transfert, un premier message de signalisation de configuration à une MME ;
recevoir, par la première station de base, un premier message de réponse de signalisation de configuration à partir d'une entité de gestion de mobilité, MME, dans lequel le premier message de réponse de signalisation de configuration comprend une adresse de la seconde station de base servant de station de base de destination de transfert ;
recevoir, par la seconde station de base, un message de signalisation de demande à partir de la MME, dans lequel le message de signalisation de demande est utilisé pour informer la seconde station de base d'une demande selon laquelle la première station de base doit établir le plan de commande d'interface X2 ;
envoyer, par la seconde station de base, un second message de signalisation de configuration à la MME, et recevoir, par la seconde station de base, après l'envoi du second message de signalisation de configuration, un second message de réponse de signalisation de configuration à partir de la MME, dans lequel le second message de réponse de signalisation de configuration comprend une adresse de la première station de base ;
recevoir, par la première station de base, le premier message de réponse de signalisation de configuration envoyé par la MME, et recevoir, par la seconde station de base, le second message de réponse de signalisation de configuration envoyé par la MME ;
envoyer, par la première station de base, un message de négociation d'établissement de plan de commande à la seconde station de base, envoyer, par la seconde station de base, après avoir reçu le message de négociation d'établissement de plan de commande, un message de réponse de négociation d'établissement de plan de commande à la première station de base, et recevoir, par la première station de base, le message de réponse de négociation d'établissement de plan de commande ; et
configurer, séparément par la première station de base et la seconde station de base, le plan de commande d'interface X2, et achever l'établissement du plan de commande d'interface X2 entre la première station de base et la seconde station de base.

5. Procédé de transmission de données selon l'une quelconque des revendications 1 à 4, dans lequel :
le plan de commande d'interface X2 entre la première station de base et la seconde station de base a une entité X2AP sur une couche de réseau radio, et une seule association SCTP est configurée sur une couche de réseau de transport entre la première station de base et la seconde station de base ; ou
le plan de commande d'interface X2 entre la première station de base et la seconde station de base a une entité X2AP sur une couche de réseau radio, au moins une association SCTP est configurée sur la couche de réseau de transport entre la première station de base et la seconde station de base, la quantité de ladite au moins une association SCTP est identique à la quantité d'opérateurs, et chacun des opérateurs a une association SCTP correspondante.

6. Procédé de transmission de données selon la revendication 5, comprenant en outre de:
lorsqu'une seule association SCTP est configurée sur la couche de réseau de transport, permettre à des informations de signalisation du premier équipement utilisateur et à des informations de signalisation d'un second équipement utilisateur qui appartient au second opérateur d'être transportées sur ladite une seule association SCTP,
dans lequel un identifiant de flux SCTP est utilisé pour distinguer différents opérateurs auxquels appartiennent le premier équipement utilisateur et le second équipement utilisateur, dans lequel les informations de signalisation du premier équipement utilisateur sont des informations de signalisation relatives au premier équipement utilisateur et les informations de signalisation du second équipement utilisateur sont des informations de signalisation relatives au second équipement utilisateur.

7. Procédé de transmission de données selon la revendication 5, comprenant en outre de:
lorsqu'au moins une association SCTP est configurée sur la couche de réseau de transport, permettre à des informations de signalisation du premier équipement utilisateur d'être transportées sur l'association SCTP correspondante du premier opérateur, et à des informations de signalisation d'un second équipement utilisateur appartenant au second opérateur d'être transportées sur l'association SCTP correspondante du second opérateur selon l'adresse de plan utilisateur d'interface X2, dans lequel les informations de signalisation du premier équipement utilisateur sont des informations de signalisation relatives au premier équipement utilisateur et les informations de signalisation du second équipement utilisateur sont des informations de signalisation relatives au second équipement utilisateur.

8. Dispositif de transmission de données, **caractérisé en ce qu'**il comprend :
une unité d'établissement de plan de commande (1) disposée dans une première station de base, configurée pour coopérer avec une seconde station de base pour établir un plan de commande d'interface X2 entre la première station de base et la seconde station de base, dans lequel la première station de base et la seconde de station base sont des stations de base partagées par un premier opérateur et un second opérateur ;
une unité de transfert d'adresse de plan utilisateur (2) disposée dans la première station de base, configurée pour, sur une liaison de transmission du plan de commande d'interface X2, transférer une adresse de plan utilisateur d'interface X2 d'un premier équipement utilisateur, dans lequel le premier équipement utilisateur est un abonné du premier opérateur, et l'adresse de plan utilisateur d'interface X2 du premier équipement utilisateur appartient à une plage de valeurs de l'adresse de plan utilisateur d'interface X2 attribuée au premier opérateur ;
une unité d'établissement de plan utilisateur (3) disposée dans la première station de base, configurée pour coopérer avec la seconde station de base pour établir, entre la première station de base et la seconde station de base, selon la plage de valeurs de l'adresse de plan utilisateur d'interface X2, un premier support de service de plan utilisateur d'interface X2 dédié au premier opérateur ; et
une unité de transmission de données (4) disposée dans la première station de base, configurée pour transmettre des données d'utilisateur du premier équipement utilisateur à la seconde station de base sur le premier support de service de plan utilisateur d'interface X2 établi.

9. Dispositif de transmission de données selon la revendication 8, dans lequel l'unité de transfert d'adresse de plan utilisateur est spécifiquement configurée pour : lorsque le premier équipement utilisateur est transféré, envoyer un message de demande de transfert à la seconde station de base, dans lequel le message de demande de transfert contient l'adresse de plan utilisateur d'interface X2 du premier équipement utilisateur ; et
le dispositif comprend en outre une unité de réception de message de réponse de demande de transfert (5), configurée pour recevoir un message de réponse de demande de transfert, que la seconde station de base envoie après avoir reçu le message de demande de transfert.

10. Dispositif de transmission de données selon la revendication 8, dans lequel l'adresse de plan utilisateur d'interface X2 est une Identité de protocole d'application X2 d'équipement utilisateur de NodeB évolué, eNB UE X2AP ID.

11. Dispositif de transmission de données selon la revendication 8, dans lequel l'unité d'établissement de plan de commande comprend en outre :
une sous-unité d'envoi de message de signalisation de configuration (11), configurée pour, lorsque le premier équipement utilisateur est transféré, envoyer un premier message de signalisation de configuration à une MME ;
une sous-unité de réception de message de réponse de signalisation de configuration (12), configurée pour recevoir un premier message de réponse de signalisation de configuration que la MME envoie après avoir reçu le premier message de signalisation de configuration, dans lequel le premier message de réponse de signalisation de configuration comprend une adresse de la seconde station de base servant de station de base de destination de transfert ;
une sous-unité d'envoi de message de négociation d'établissement (13), configurée pour envoyer un message de négociation d'établissement de plan de commande à la seconde station de base ;
une sous-unité de réception de message de réponse de négociation d'établissement (14), configurée pour recevoir un message de réponse de négociation d'établissement de plan de commande que la seconde station de base envoie après avoir reçu le message de négociation d'établissement de plan de commande ; et
une sous-unité de configuration (15), configurée pour configurer le plan de commande d'interface X2 de la première station de base.

12. Dispositif de transmission de données selon l'une quelconque des revendications 8 à 11, dans lequel :
le plan de commande d'interface X2 entre la première station de base et la seconde station de base a une entité X2AP sur une couche de réseau radio, et une seule association SCTP est configurée sur une couche de réseau de transport entre la première station de base et la seconde station de base ; ou
le plan de commande d'interface X2 entre la première station de base et la seconde station de base a une entité X2AP sur une couche de réseau radio, et au moins une association SCTP est configurée sur la couche de réseau de transport entre la première station de base et la seconde station de base, la quantité de ladite au moins une association SCTP est identique à la quantité d'opérateurs, et chacun des opérateurs a une association SCTP correspondante.

13. Dispositif de transmission de données selon la revendication 12, comprenant en outre : une unité d'établissement de support (6), configurée pour : lorsqu'une seule association SCTP est configurée sur la couche de réseau de transport, permettre à des informations de signalisation du premier équipement utilisateur et à des informations de signalisation d'un second équipement d'utilisateur qui appartient au second opérateur d'être transportées sur ladite une seule association SCTP, dans lequel un identifiant de flux SCTP est utilisé pour distinguer différents opérateurs auxquels appartiennent le premier équipement utilisateur et le second équipement utilisateur, dans lequel les informations de signalisation du premier équipement utilisateur sont des informations de signalisation relatives au premier équipement utilisateur et les informations de signalisation du second équipement utilisateur sont des informations de signalisation relatives au second équipement utilisateur.

14. Dispositif de transmission de données selon la revendication 12, comprenant en outre : une unité d'établissement de support, configurée pour : lorsqu'au moins une association SCTP est configurée sur la couche de réseau de transport, permettre à des informations de signalisation du premier équipement utilisateur d'être transportées sur l'association SCTP correspondante du premier opérateur, et à des informations de signalisation du second équipement utilisateur qui appartient au second opérateur d'être transportées sur l'association SCTP correspondante du second opérateur respectivement selon l'adresse de plan utilisateur d'interface X2, dans lequel les informations de signalisation du premier équipement utilisateur sont des informations de signalisation relatives au premier équipement utilisateur et les informations de signalisation du second équipement utilisateur sont des informations de signalisation relatives au second équipement utilisateur.

15. Système de transmission de données, **caractérisé en ce qu'**il comprend le dispositif de transmission de données selon l'une quelconque des revendications 8 à 14, dans lequel le dispositif de transmission de données est disposé dans la première station de base, et le système comprend en outre : la seconde station de base communiquant avec la première station de base par l'intermédiaire d'une interface X2.
